(19) Europäisches Patentamt
European Patent Office
Office européen des brevets

(11) **EP 2 233 315 A1**

(12) **EUROPEAN PATENT APPLICATION**

(43) Date of publication:
**29.09.2010 Bulletin 2010/39**

(51) Int Cl.:
**B42D 15/00** *(2006.01)*          **B42D 15/10** *(2006.01)*
**G07D 7/06** *(2006.01)*

(21) Application number: **10157911.8**

(22) Date of filing: **26.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **26.03.2009 EP 09156340**

(71) Applicant: **CSEM Centre Suisse d'Electronique et de Microtechnique SA - Recherche et Développement 2002 Neuchâtel (CH)**

(72) Inventors:
• **Seitz, Peter**
  **8902 Urdorf (CH)**
• **Nüesch, Joachim**
  **8004 Zürich (CH)**

(74) Representative: **Schneider Feldmann AG Patent- und Markenanwälte Beethovenstrasse 49 Postfach 2792 8022 Zürich (CH)**

(54) **Authentication item and system for packaged articles and method for the manufacturing of the authentication item**

(57)     The present invention discloses, inter alia, an authentication item manufactured on product units for encoding the product units as being authentic. The authentication item is an intensity-modulating surface comprising a plurality of adjacent protrusions such that the intensity-modulating surface has alternating height. Each of the protrusions has at least two slopes of respective different orientation. When being in an authenticating position with respect to incident electromagnetic radiation employed for authentication, the authentication item modulates the intensity of the electromagnetic radiation in a manner that generates an intensity profile which is characteristic of the authentication item. In the authentication position, the propagation direction of the incident electromagnetic radiation is at least approximately parallel to one of the at least two slopes of the plurality of protrusions.

FIGURE 4A

**Description**

**FIELD OF THE INVENTION**

The present invention relates to the field of authentication and more specifically, to the verification of the authenticity of product units on sale.

**BACKGROUND OF THE INVENTION**

Counterfeiting of product units considered to be valuable such as, for example, pharmaceuticals like, e.g., prescription drugs, non-prescription drugs; luxury articles like, e.g., watches, jewelry, brand-name apparel; consumer electronic goods; food from declared geographical origin like, e.g., wine and cheese; and/or machine-readable media such as, for example, Compact-Disc records, Digital Versatile Discs (DVD), blue-ray discs, computer-game media storing valuable information erodes or diminishes the return of investment of, e.g., the developer and/or manufacturer and/or vendor and/or licensor and/or marketer of the authentic product, thus discouraging launching the development and/or the marketing of new products. Accordingly, counterfeiting of articles poses a danger to the world's economy and is counterproductive to innovation. Moreover, counterfeiting articles may in some cases have the potential of negatively affecting consumer wellbeing. For example, counterfeited pharmaceuticals and/or foods may not be subjected to stringent regulations performed, e.g., Food and Drug Administration (FDA), and/or counterfeited brand apparel not being subjected to standardized tests may for example, be more easily inflammable than the authentic apparel, thereby potentially adversely affecting the consumer's health. Moreover, counterfeiting product units may give rise to commercial, since the customer may pay the same price for counterfeited product units as for authentic product units.

Various methods outlining how counterfeited product units may be distinguished from authentic product units, for example, by various constituents of the value chain, such as individual consumers, retailers, wholesalers, original producers, as well as law enforcement or customs officials, are described in the literature. For example, patent application WO2006/027688 to Walter, describes an article such as a medicinal tablet or a foodstuff having a microstructured surface such that white light incident on the microstructure will be reflected at a number of different wavelengths dependent on the angle of incidence of the white light on the structure, thereby possibly providing structure an indication of authenticity of the article. To authenticate the article, the packaging thereof must either be sufficiently transparent to allow impingement of white light on and generate reflection from the structure discernible by an observer. Alternatively, the article must be unpacked or unwrapped prior to verifying authenticity.

The scattering and/or absorption of light by packaging of articles may be reduced by probing the article subject to verification of its authenticity with infrared light due to the increase in transmissivity of infrared compared to white light through at least some of the packaging materials used such as, for example, cardboard and plastic. An authentication method employing radiation of the infrared range is described in patent application US20080199406 to Walter et al., which requires interferometric read-out of the authenticating label.

Patent application US2003/0194053 to Schramm et al. discloses an apparatus and methods in which one or more elemental taggants that are extrinsically placed in an object are detected by X-ray fluorescence analysis to identify or authenticate the object. The taggant is manufactured as part of the object or the taggant is placed into a coating, packaging, label, or otherwise embedded onto the object for the purpose of later verifying the presence or absence of these elements by X-ray fluorescence. The taggant is then analyzed by X-ray fluorescence analysis, and the analysis is then converted into a 2D symbol format that can be used in various security and authentication applications. This apparatus and methods require specific labeling of the product units.

Patent application EP1348575 to Landqart discloses a security item which is characterized by at least one security element having at least one segment comprising at least one latent UV or IR absorber. A latent absorber is a compound or composition capable of liberating a UV absorber on demand. Preferentially, the latent absorber is converted to its absorbing form in a spatially resolved manner thus providing the desired information as latent image. Information imprinted within a substrate containing said absorbers is invisible to the naked eye. Moreover, the information is also invisible under UV irradiation. Only if a photoluminescent screen or background is used under UV irradiation, the "imprinted" information becomes apparent as a shadow image on the photoluminescent screen, since, in the areas where the latent absorber has been converted to the UV absorber, the UV light is being absorbed and does not reach the photoluminiscent device. This authentication method requires the marking of the security item with additional chemicals.

**DESCRIPTION OF THE FIGURES**

These and further features and advantages of the invention will become more clearly understood in the light of the ensuing description of a some embodiments thereof, given by way of example only, with reference to the accompanying figures, wherein:

**Figure 1** is a general schematic side view illustration of an intensity-profiling arrangement;

**Figure 2** is a schematic side view illustration of the intensity-profiling arrangement employing an object in a non-authenticating position, wherein the upper and lower side of the object comprise a respective intensity-modulating surface, according to an embodiment of the invention;

**FIGURE 3A** is a schematic side view illustration of an object, wherein the upper and lower side of the object comprise intensity-modulating surface in authentication positions with respect to incident electromagnetic radiation, according to an alternative embodiment of the invention;

**FIGURE 3B** is a schematic side view illustration of an object, wherein the upper and lower side of the object comprise intensity-modulating surfaces in authentication positions with respect to incident electromagnetic radiation, according to another embodiment of the invention;

**FIGURE 3C** is a schematic side view illustration of an object, wherein the upper and lower side of the object comprise intensity-modulating surfaces in authentication positions with respect to incident electromagnetic radiation, according to a yet alternative embodiment of the invention;

**FIGURE 4A** is a schematic side view illustration of the intensity-profiling arrangement employing the object of **FIGURE 2**, wherein the object is in a first authenticating position, according to an embodiment of the invention;

**FIGURE 4B** is a schematic side view illustration of the intensity-profiling arrangement employing the object of **FIGURE 2,** wherein the object is in a second authenticating position, according to another embodiment of the invention;

**FIGURE 5A** is a schematic side view illustration of an object only one side of which comprises an intensity-modulating surface, according to an embodiment of the invention;

**FIGURE 5B** is a schematic side view illustration of the object of **FIGURE 5A** constituting a substrate for a contrast-enhancing layer, according to an embodiment of the invention;

**FIGURE 6** is a schematic side view illustration of product units comprising packaging having an intensity-modulating surface which is in an authenticating position with respect to incident electromagnetic radiation, according to an embodiment of the invention;

**FIGURE 7A** is a schematic side view illustration of product units comprising an article having an intensity-modulating surface which is in an authenticating position with respect to the incident electromagnetic radiation, wherein a radiation detector is in a first sensing position, according to an embodiment of the invention;

**FIGURE 7B** is a schematic side view illustration of product units comprising the article having the intensity-modulating surface which is in the authenticating position with respect to the incident electromagnetic radiation, wherein the radiation detector is in a second sensing position, according to another embodiment of the invention;

**FIGURE 8** is a schematic illustration of an authentication system, according to an embodiment of the invention;

**FIGURE 9** is a schematic illustration of an authentication system, according to another embodiment of the invention;

**FIGURE 10** is a schematic illustration of an authentication system, according to an alternative embodiment of the invention;

**FIGURE 11A** is an image representation of an intensity profile of an object having an intensity-modulating surface implemented by periodical pyramids of which slopes are in a authenticating position with respect to the incident electromagnetic radiation;

**FIGURE 11B** is an image representation of an intensity profile of the object of **FIGURE 10A** wherein the periodical pyramids are in a non-authenticating position with respect to the incident electromagnetic radiation;

**Figure 12** is a flow-chart of an authentication method according to an embodiment of the invention; and

**Figure 13** is a flow-chart of a method for manufacturing an authentication item using thermoforming according to an embodiment of the invention.

## DESCRIPTION OF THE INVENTION

It should be noted that the term "product unit" as used herein refers to any physically tangible, individually distinguishable unit of packaged or unpackaged good or goods, wherein such a product unit has a surface onto which a plurality of protrusions or grooves can be provided, i.e., the product unit comprises a markable surface. Accordingly, such a product unit may also be referred to as a "piece good" or "piece cargo".

Positional terms such as "upper", "lower" "right", "left", "bottom", "below", "lowered", "low", "top", "above", "elevated", "high", "vertical" and "horizontal" as well as grammatical variations thereof as may be used herein do not necessarily indicate that, for example, a "bottom" component is below a "top" component, or that a component that is "below" is indeed "below" another component or that a component that is "above" is indeed "above" another component as such directions, components or both may be flipped, rotated, moved in space, placed in a diagonal orientation or position, placed horizontally or vertically, or similarly modified. Accordingly, it will be appreciated that the terms "bottom", "below", "top" and "above" may be used herein for exemplary purposes only, to illustrate the relative positioning or placement of certain components, to indicate a first and a second component or to do both.

It should be noted that the term "maximal contrast value" as used herein refers to a maximal attainable value of the contrast of transmitted electromagnetic radiation, measured at a given location by a detector, in consideration of constraints dictated by various parameters, including for example operation criteria and/or configuration of a corresponding authentication system and/or structure of an examined product unit. Accordingly, the expressions "maximal" as used herein refer to a relative maximal attainable contrast value and not to an absolute maximal contrast value.

It should be noted that the phrase "above a threshold", as well as paraphrases and/or grammatical variations thereof, may interchangeably mean the phrase "equal or above a threshold". Accordingly, the phrase "below a threshold" as well as paraphrases and/or grammatical variations thereof, may interchangeably mean the phrase "equal or below a threshold". However, it is clear that should a condition be interpreted as being fulfilled if the value of a given parameter is above a threshold, then the same condition is considered as not being fulfilled if the value of the given parameter is equal or below the given threshold. Conversely, should a condition be interpreted as being fulfilled if the value of a given parameter is equal or above a threshold, then the same condition is considered as not being fulfilled if the value of the given parameter is below (and only below) the given threshold.

Summary of the invention:

The present invention discloses an authentication item providable on at least one product units for encoding the at least one product unit as being authentic.

In embodiments the authentication item comprises an intensity-modulating surface having a sawtooth-like profile; wherein the authentication item modulates the intensity of incident electromagnetic radiation in a manner that generates an intensity profile which is characteristic of the authentication item.

In embodiments, the intensity-modulating surface respective of the authentication item forms at least parts of the surface of the at least one product unit.

In embodiments, the authentication item is an intensity-modulating surface comprising a plurality of adjacent protrusions such that the intensity-modulating surface has alternating height; wherein each of the protrusions has at least two slopes of respective different orientation; wherein the authentication item, when being in an authenticating position with respect to incident electromagnetic radiation employed for authentication, modulates the intensity of the electromagnetic radiation in a manner that generates an intensity profile which is characteristic of the authentication item.

In embodiments, the intensity-modulating surface is the surface of the at least one product unit.

In embodiments, the intensity-modulating surface includes a contrast-enhancing layer provided on at least a part of the surface of the at least one product unit, wherein the contrast-enhancing layer effects an increased intensity modulation of the incident electromagnetic radiation, compared to the intensity modulation effected by the at least one product unit free of said contrast-enhancing layer. The at least one product unit constitutes the substrate for the contrast-enhancing layer.

In embodiments, the contrast-enhancing layer has a thickness d ranging between 5 nm to 1 mm.

The present invention additionally discloses a method of manufacturing the authentication item to obtain the intensity-modulating surface.

. In embodiments, the method of manufacturing includes at least one of the following procedures: printing, embossing, molding, injection-molding and thermoforming.

In embodiments, the method of thermoforming includes the following procedures: preheating a plastic film to a preheat temperature to obtain a moldable plastic film; molding a blister cavity into the moldable plastic film by applying a molding pressure to obtain a molded plastic film; and cooling down the molded plastic film such that the molded plastic film maintains its shape.

In embodiments, the molding pressure ranges from 4 to 8 bars.

The present invention further discloses an authentication system for the authentication of at least one product unit.

In embodiments, the authentication system includes a radiation source operative to emit electromagnetic radiation incident on the at least one product unit; and a radiation detector operative to detect electromagnetic radiation transmitted through the at least one product unit. The authentication system is operative such that the propagation direction of the electromagnetic radiation incident on the at least one product unit is adjustable to different orientations for the detection of intensity profiles of the transmitted electromagnetic radiation for the different orientations to search for an intensity profile that is characteristic of an authentication item providable on at least one product unit.

In embodiments, the radiation source and the inspection platform are operative such that the propagation direction of the electromagnetic radiation incident on the product unit is adjustable to different orientations, thereby enabling the detection of intensity profiles of the transmitted electromagnetic radiation for a plurality of different positions and to determine for each position whether the detected transmitted electromagnetic radiation is characteristic of the modulation subjected on incident radiation by an authentication item manufacturable on a product unit. Otherwise stated, authentication system is operative to determine for each of the plurality positions whether respectively detected transmitted radiation meets the at least one authentication criterion.

In embodiments, the radiation source and the radiation detector are encased in a portable housing.

In embodiments, the authentication system includes an inspection platform onto which the at least one product unit is positionable for authentication.

In embodiments, the inspection platform is encased in the portable housing.

In embodiments, the electromagnetic radiation is in the X-ray or infrared range.

In embodiments, the inspection platform is a rotatable turntable that enables obtaining the different orientations between the propagation direction and the at least one product unit.

In embodiments, the radiation source is a displaceable radiation source or a scanning radiation source. Accordingly, the orientation between the incident electromagnetic radiation and the at least one product unit can be changed by displacement of the radiation source with respect to the at least one product unit or by scanning the at least one product unit with the radiation source.

The present invention also discloses a method for authenticating product units according to at least one predetermined authentication criterion with an authentication system.

In embodiments, the method for authentication product units includes the following procedures: positioning at least one product unit into an authenticating position with respect to a radiation source and a radiation detector; irradiating the at least one product unit with electromagnetic radiation emitted by the radiation source; detecting the transmitted electromagnetic radiation by the radiation detector; determining by the authentication system whether the detected electromagnetic radiation meets the at least one predetermined authentication criterion to yield an authentication result; and providing an output indicative of the authenticity of the at least one product unit according to said authentication result.

In embodiments, the authenticating position is attained if the propagation direction of the incident electromagnetic radiation is at least approximately parallel to one of the at least two slopes of the plurality of protrusions.

In embodiments, the intensity-modulating surface is the surface of the product unit.

Detailed description of the invention:

Embodiments of the present invention disclose an authentication item providable on product units, as well as a system and method for the authentication of product units, e.g., a system and method for the authentication product units obviating inter alia the need for unpacking or damaging the articles for authentication, whereby the packaging material may be made of a variety of materials such as, for example, organic materials like, e.g., paper, cardboard, plastics, wood or other plant-based matter having a security feature manufactured thereon.

According to embodiments of the invention, the authentication item, when being in an authenticating position with respect to incident electromagnetic radiation employed for authentication, modulates the intensity of the electromagnetic radiation in a manner that generates an intensity profile that is characteristic of the authentication item.

According to embodiments of the disclosed technique, the authentication item is a one- or two-dimensional intensity-modulating surface embodied, for example, by a corrugated surface. The corrugated surface may be embodied, for example, by a plurality of periodical pyramids having first and second slopes. Alternatively, the corrugated surface may be embodied, for example, by a plurality of ramp-like shaped protrusions of which one slope of each protrusion is at least approximately normal to an imaginary line connecting the lowest points of the corrugated surface.

Embodiments of the disclosed method and system comprise and enable the procedure of irradiating the product unit with electromagnetic radiation, hereinafter "authenticating radiation", whereby the electromagnetic radiation incident on a product unit is hereinafter referred to as "incident electromagnetic radiation", and electromagnetic radiation transmitted through the product unit as a result of the incident electromagnetic radiation is hereinafter referred to as "transmitted electromagnetic radiation".

According to embodiments of the disclosed invention, the intensity-modulating surface of the authentication item is configured such that, when in an authentication position, the intensity profile of the incident electromagnetic radiation is modulated into a desired detectable modulated one- or two-dimensional intensity profile of the transmitted electromagnetic radiation, which is visualized for authentication.

Correspondingly, embodiments of the system and method may enable and may comprise, respectively, the procedures of detecting the resulting intensity profile of the transmitted electromagnetic radiation, and determine whether the detected intensity profile meets at least one predetermined authentication criterion representative of a desired intensity profile for authentication. If for example the detected intensity profile matches the desired intensity profile, authenticity of the article(s) and/or the packaging is verified. Conversely, if the resulting intensity profile does not meet the at least one criterion, authenticity of the article(s) and/or of the packaging is not verified. The desired intensity profile is a function of a corrugation pattern manufactured on the surface of either the article(s) or the packaging thereof. The surface is herein referred to as "intensity-modulating surface". Correspondingly, the corrugation pattern on the surface of the article(s) and/or the packaging encodes authentication information.

According to embodiments of the disclosed technique, the intensity-modulating surface comprises a plurality of protrusions, wherein the profile of each protrusion features at least two slopes of converging orientation with respect to each other. In embodiments of the invention, the intensity-modulating surface has a profile such that the at least two slopes converge into an apex. Specifically, a first slope of the at least two slopes has a first orientation and a second slope of the at least two slopes has a second different orientation. The first slope having a first orientation passes over directly or indirectly to a second slope having a second orientation, i.e., first and second slopes are tilted towards each other in an alternating manner such that the intensity modulating surface has alternating height. Otherwise stated, the intensity-modulating surface exhibits a sawtooth-like or jagged profile. In respective embodiments of the invention, the plurality of protrusions may all have identical profiles, or the protrusions may have at least two different profiles. Protrusions of different profiles may be arranged with respect to each other according to various predetermined patterns.

According to embodiments of the invention, the above-mentioned authentication position refers to an orientation and distance of the product unit with respect to the radiation source and the radiation detector such that an authentication item subjects incident radiation originating from the radiation source to the desired intensity modulation resulting in a transmitted radiation having an intensity profile meeting the at least one authentication criterion. For example, in the authentication position, the intensity-modulating surface may be in position such that its first slopes are at least approximately in alignment or in other words at least approximately parallel to the propagation direction of the incident electromagnetic radiation, whereas the second slopes are not parallel to the propagation direction. As a consequence, the radiation intensity of the incident electromagnetic radiation impinging on the first slopes is attenuated along or in correspondence with the length of the first slope, compared to the radiation intensity of the incident electromagnetic radiation impinging on the second slopes. The difference in attenuation of radiation intensity, i.e., modulation of the intensity caused by the particular orientation of the first and second slopes with respect to the propagation direction generates a corresponding intensity profile of the transmitted electromagnetic radiation, wherein the detected intensity profile meets the at least one authentication criterion.

According to embodiments of the invention, the at least one authentication criterion defines a minimal contrast of the detected intensity profile to be obtained by irradiation of the intensity-modulating surface. Contrast of the detected radiation may be defined as follows by the following equation:

$$Contrast = \frac{I_{max} - I_{min}}{I_{max} + I_{min}} \qquad (1)$$

and may be, for example, at least 0.001, 0.01, or 0.05, wherein, $I_{max}$ and $I_{min}$ are the detected maximum and the minimum intensity value of the desired intensity profile.

According to respective embodiments of the invention, the at least one criterion may define additional or alternative parameters required to be met for approving authenticity of a product unit. The additional or alternative parameters may include, for example, required minimal and/or maximal spatial frequency of the contrast pattern, for example between 1 mm - 50 $\mu$m; minimal and/or maximal dimensions of the contrast pattern or any combination of the aforesaid parameters.

As outlined hereinafter, embodiments of the present invention employ electromagnetic radiation for the authentication of packaged articles, such to enable contact-less authentication of articles. In other words, embodiments of the authentication method and system obviate the need of unpacking or unwrapping and/or direct physical contact of articles, e.g., by a person, for determining the authenticity of product units. As a consequence, the need of deliberately damaging the packaging for authenticating the packaged articles is obviated. Further, the danger of unintentionally damaging of product units due to physical contact with the person performing authentication is minimized.

According to embodiments of the invention, the authentication system is a portable system comprising the radiation source, the radiation detector and an inspection platform all of which are in relative position to each other such that product units are engageable with the inspection platform positioning the article to the authenticating position.

Embodiments of the authentication method are compatible with conventionally used packaging materials or procedures and may be employed in combination with alternative authentication systems and/or methods, e.g., as used in the art.

Methods for manufacturing the intensity-modulating surface on product units include, e.g., printing, embossing, molding, and in particular especially injection-molding and thermoforming. These manufacturing methods are even capable of realizing such intensity-modulating surfaces directly on articles like, e.g., pills, besides of being manufacturable on packaging material. Any of these manufacturing methods and the tools needed for performing the methods requires considerable expertise and effort, thereby incumbering attempts of counterfeiting product units.

According to embodiments of the disclosed technique, of the desired intensity profile may be improved by coating the product units with a layer of material whose absorptive properties for the used electromagnetic radiation differ significantly from those of the layer's substrate, which is embodied by the product units.

According to embodiments of the disclosed invention, the wavelength of the electromagnetic radiation is chosen such that the product units and optionally the intensity-modulating surface is partially transparent to the radiation (corresponding to absorption values of 0.1% to 99.9% of the incident intensity) and causes only moderate (1%-10% of the incident intensity) or negligible (<1% of the incident intensity) radiation scattering.

According to embodiments of the invention, product units may be irradiated with electromagnetic radiation of the infrared spectral region with a wavelength range of, for example, 800 nm - 10000 nm, and/or of the X-ray spectral region at a wavelength range of for example, 0.0025 - 0.1 nm. At these wavelength ranges, packaging materials such as paper, cardboard, plastics, wood and/or other organic material can be fairly transparent, exhibiting typical absorption values of, e.g., 1%-99% of the incident radiation.

To enable potentially achieving a detectable contrast by a radiation detector, the distance between a radiation source of the incident electromagnetic radiation and the product units for which authentication is verified, may not exceed a certain threshold for the ranges of energy exemplified herein. For example, for incident electromagnetic radiation being in the X-ray spectrum, the distance between the radiation source and an object may range, e.g., from 1 cm to 50 cm, and the distance between object and radiation detector may range, e.g., from 10 cm to 100 cm.

The sensitivity of a detector in the above mentioned wavelength range are typically 1 % - 99 %.

Under these conditions, the contrast-enhancing layer on the embossed material has a different elemental composition and/or a different density from the underlying substrate or both.

The authentication method can be combined with a plurality of other known or future authentication methods for increased security.

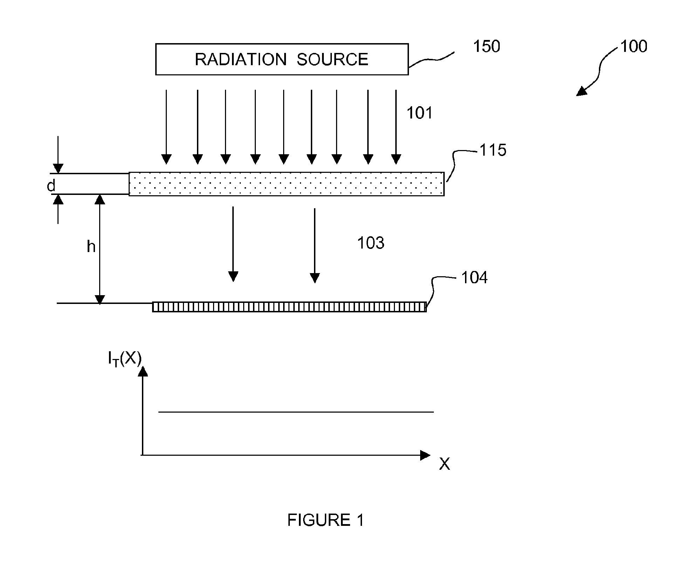

Reference is now made to **FIGURE 1.** As is known in the art, an schematically illustrated and outlined with reference to an intensity profiling arrangement **100,** an object **115** may partially absorb only a fraction of incident electromagnetic radiation **101** of authenticating radiation emanating from a radiation source **150,** resulting in that transmitted electromagnetic radiation **103** emanates from object **115,** wherein transmitted electromagnetic radiation **103** may be detected by a radiation detector **104.** If object **115** is homogeneous for the wavelength of incident electromagnetic radiation **101,** and the thickness d of object **115** is at least approximately equal with respect to the propagation direction of incident electromagnetic radiation **101** through object **115,** then the transmitted radiation intensity $I_T(x)$ of transmitted electromagnetic radiation **103** does not vary as a function of the lateral position x, as is schematically illustrated by the graph, provided that the distance H along lateral position x between radiation detector **104** and radiation source **150** for incident electromagnetic radiation **101** is at least approximately constant and the intensity of the emanating wavefront is laterally at least approximately equally distributed.

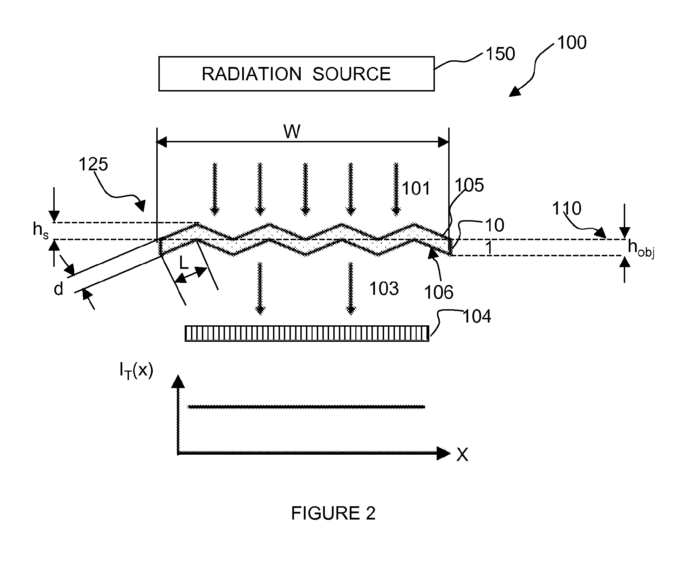

Reference is now made to **FIGURE 2.** According to embodiments of the invention, object **115** may be marked for authentication by rendering the same to become intensity-modulating, which may be achieved, for example, by shaping object **115** such to feature an upper intensity-modulating surface **105** having, for example, varying height, to obtain object **125.** Height $h_s$ of upper intensity-modulating surface **105** ranges, for example, between 1 $\mu$m - 50 $\mu$m.

According to embodiments of the invention, shaping object **115** to become intensity-modulating may be achieved, for example, by one-sided or two-sided corrugating (e.g., by embossing) of object **115.** If the material of object **115** is hardly compressible, i.e. the plastic deformation causes a lasting change of density of less than, e.g., 5%, such as, for example, metallic materials, then the process of manufacturing intensity-modulating object **125** may produce an at least approximately conformal shaping of object **115** generating besides upper intensity-modulating surface **105** also a lower intensity-modulating surface **106** of object **125,** such that the distance **d** between upper intensity-modulating surface **105** and lower intensity-modulating surface **106** remains at least approximately constant. Since upper intensity-modulating surface **105** and lower intensity-modulating surface **106** are formed on the same object **115,** e.g., due to plastic deformation of the latter, they are in at least approximately parallel registration relative to each other, or in other words, the upper profile respective of upper intensity-modulating surface **105** is at least approximately parallel to the lower profile respective of the lower intensity-modulating surface **106.** This at least approximately parallel registration is in embodiments of the invention obtainable by employing at least one single-sided embossing procedure. If intensity-modulating object **125** is positioned such that the propagation direction of incident electromagnetic radiation **101** is at least approximately perpendicular to an imaginary line **110** connecting between the lowest points of upper intensity-modulating surface **105,** then incident electromagnetic radiation **101** is subjected to an at least approximately uniform attenuation across lateral distance x, due to the insignificant variation of the height $h_s$ of intensity-modulating surface **105** of object **125.** In other words, differences in attenuation to which incident electromagnetic radiation **101** may subjected to are negligible or non-detectable. As a result, transmitted electromagnetic radiation **103** features an intensity profile that is at least approximately constant or for which the differences in intensity modulation along lateral distance x is negligible, despite the embossed height variations of upper intensity-modulating surface **105** and optionally of lower intensity-modulating surface **106.** Accordingly, object **125** and its corresponding authentication item, namely upper intensity-modulating surface **105** and/or lower-intensity modulating surface **106** is set to be in a non-authenticating position. As is schematically illustrated in **FIGURE 2.** intensity-modulating surface **105** may in an embodiment have a pyramid-like structure.

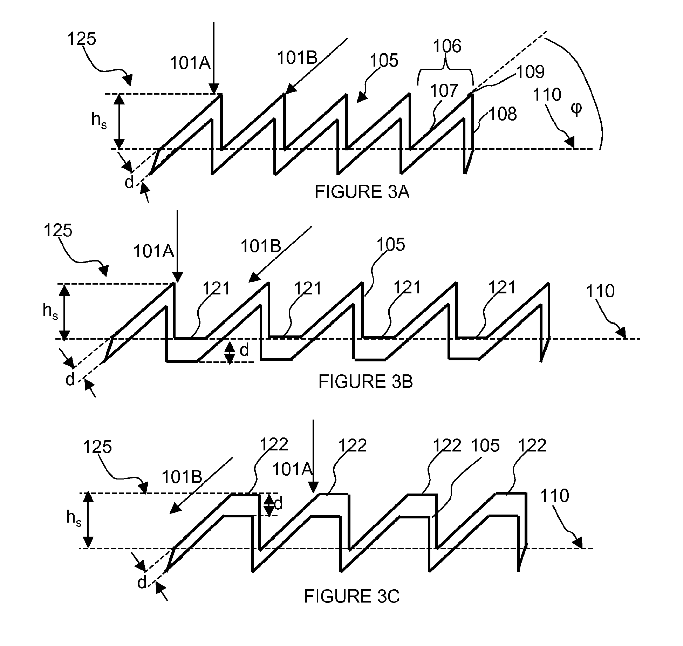

With reference to **FIGURE 3A, FIGURE 3B** and **FIGURE 3C,** intensity-modulating surface **105** may comprise ramp-liked protrusions **106** having a first slope **107** and a second slope **108** terminating for example, in an apex **109.** With respect to an imaginary line **110** connecting the lowest points of upper intensity-modulating surface **105,** first slope **107** for example, may extend in an acute angle φ towards apex **109,** whereas second slope **108** may for example, may be in an at least approximately normal angle. As is schematically illustrated in **FIGURE 3B,** adjacent protrusion of upper intensity-modulating surface **105** may be spaced apart by a plane-like trough **121.** Alternatively, as is schematically illustrated in **FIGURE 3B,** each protrusion may comprise a respective plateau **122.** Relative positions between upper intensity-modulating surface **105** and direction of propagation of incident electromagnetic radiation **101** are schematically illustrated with corresponding arrows **101A** and **101B.**

Clearly, as is for example schematically illustrated in Figures **2, 4A, 4B, 5A** and **5B,** both first slope **107** and second slope **108** of for example upper intensity-modulating surface **105** may form an acute angle with respect to imaginary line **110** and terminate, for example, in apex **109.**

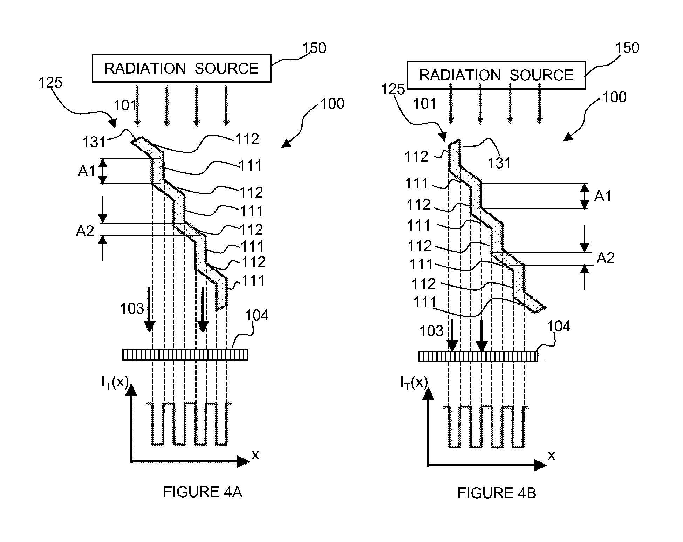

Additional reference is now made to **FIGURE 4A** and **FIGURE 4B.** According to embodiments of the disclosed invention, object **125** may be set with respect to the radiation source **150** into an authenticating position such that at least some of the intensity of incident electromagnetic radiation **101** passing through object **125** is subjected to intensity modulation resulting in differences in amplitude of transmitted electromagnetic radiation **103,** wherein the differences amplitude depends on the lateral position x and are characteristic of upper intensity-modulating surface **105** and lower intensity-modulating surface **106.** More specifically, rotated object **125** may be set into first or second authenticating positions relative to the propagation direction of incident electromagnetic radiation **101** such that either first slopes **111** **(FIGURE 4A)** or second slopes **112 (FIGURE 4B),** respectively, are at least approximately parallel to incident electromagnetic radiation **101.**

Correspondingly, as is schematically illustrated in **FIGURE 4A,** in the first position, intensity of incident electromagnetic radiation **101** when passing through first slopes **111** is subjected to attenuation along a distance **A1** that corresponds to the length of first slopes **111,** which is significantly higher than the distance **A2** along which incident electromagnetic radiation **101** suffers attenuation, e.g., due to absorption, when passing through second slopes **112,** i.e., **A1 > A2.** Therefore, lowest intensity $I_T$ as a function of lateral position x is measured at the position of first slopes **111,** whereas highest intensity $I_T$ is measured at the position of second slopes **112.**

Conversely, if object **131** is in the second authenticating position, as is schematically illustrated in **FIGURE 4B,** intensity of incident electromagnetic radiation **101** when passing through first slopes **111** suffers attenuation along distance **A2,** whereas when passing through second slopes **112** the intensity suffers attenuation along distance **A1.** Therefore, intensity $I_T$ as a function of lateral position **x** is lowest at the position of second slopes **112,** and highest at the lateral position **x** of first slopes **111.** In any event, the intensity modulation exhibited by rotated object **125** is detectable by radiation detector **104.**

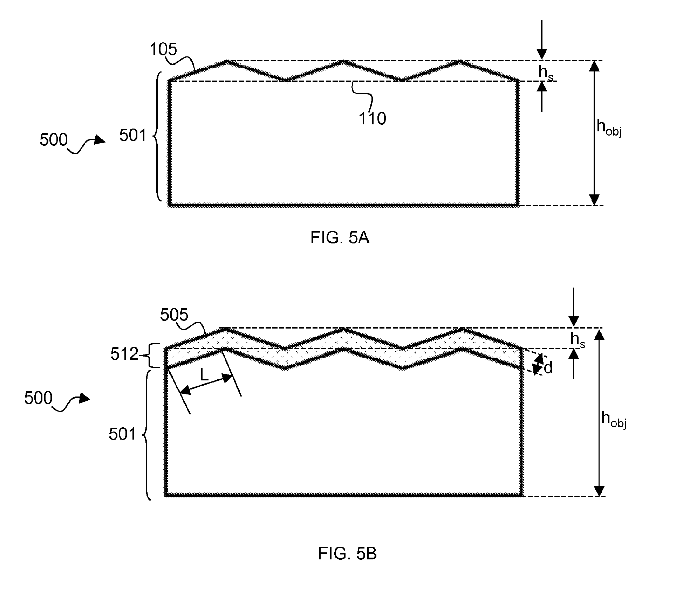

Further referring now to **FIGURE 5A,** an object **500** may comprise only one, e.g., upper intensity-modulating surface **105,** i.e., the shaping of object **500** is non-conformal. An intensity-modulating object such as, for example, object **500,** may be an integrally formed with an article or articles and/or may be an integrally formed with packaging of the article(s). The article(s) may be embodied, for example, by pharmaceuticals, whilst the packaging may be embodied, for example, by blister packaging. Non-conformal shaping for generating object **500** may be suitable for packaging that is abutting or adjacent to the packaged article(s).

It should further be noted that in some embodiments of the invention, height h of intensity-modulating surface $h_S$ may be significantly smaller than the height $h_{obj}$, i.e., $h_s << h_{obj}$. For example, $10^*h_s = h_{obj}$, or $100^*h_s = h_{obj}$, whereby $h_s$ may range, e.g., between 1-50 micrometers. This range for $h_s$ may be desirable if the intensity-modulating profile should be invisible for the naked eye. Clearly, with $h_s$ of these measures, the intensity attenuation that incident electromagnetic radiation **101** suffers through substrate **501** of object **500** is much larger than the absorption variation created by upper intensity-modulating surface **105.** The length L of first slopes **111** and second slopes **112** may range, for example, between 100 μm - 1mm. Generally, $h_s$ of an intensity-attenuating surface such as, for example, surface **105,** may range, for example, between 10% -100% of length L, whereby the overall width **W** may range, for example, from 100 μm to about 50 mm millimeters long.

As is schematically illustrated in **FIGURE 5B,** to increase intensity-modulating properties of object **500,** its substrate **501** may be covered by a thin and at least approximately uniform contrast-enhancing layer **512** having, for example, increased intensity-attenuating properties compared to substrate **501.** The thickness d of contrast-enhancing-layer **512** may range, for example, between 5 nm to 1 mm.

The intensity-attenuating properties of contrast-enhancing layer **512** for the employed spectrum of incident electromagnetic radiation **101** may be significantly larger than those of substrate **501,** i.e. the linear attenuation coefficient of contrast-enhancing layer **512** should be at least 1% higher than that of substrate **501,** and it may be 1000 times higher. Therefore, contrast-enhancing layer **512** enhances the contrast in differences of attenuation, compared to the contrast that would be obtained without contrast-enhancing layer **512.** Contrast-enhancing layer **512** may be made of various materials such as, for example, aluminum, nickel, gold, silver, cesium iodide.

The thickness of contrast-enhancing layer **512** must be significant smaller than L e.g. at most 10% of the length L. This provides for sufficient lateral contrast when irradiating intensity-modulating surface **505** in either of first or second position, as is schematically illustrated in **FIGURE 4A** and **FIGURE 4B,** respectively.

It should be noted that with respect to upper intensity-modulating surface **105** its height $h_s$ is for example maximal 50 μm.

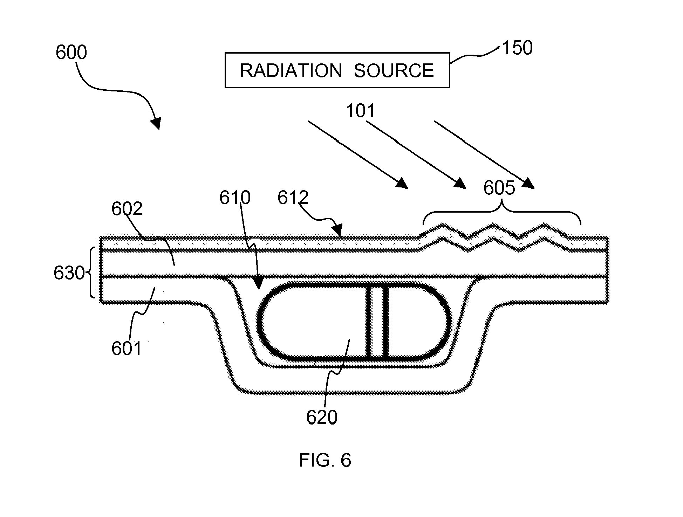

Additional reference is now made to **FIGURE 6.** Product units **600** may comprise packaging **630** containing an article exemplified by a pill **620.** Packaging **530** may be embodied by a blister packaging comprising a concavely formed covering material **601** which may be for example adhesively coupled to a generally planar base material **602** to form a cavity **610** operative to hold pill **620.** Both covering material **601** and base material **602** may be made of optically transparent, molded plastics. A contrast-enhancing layer **612** may be provided on base material **602,** which constitutes the substrate for contrast-enhancing layer **612.** Contrast-enhancing layer **612** comprises an intensity-modulating surface **605.** As a consequence, base material **602** may encode authentication information enabling the verification of the authenticity of the blister packaging. As outlined hereinabove, the authenticity may be verified by irradiating base material **602** with incident electromagnetic radiation **101,** whereby base material **602** is either in first or second position relative to incident electromagnetic radiation **101.** It should be noted that additionally or alternatively, contrast-enhancing layer **612** may be provided on covering material **601** (not shown). Contrast-enhancing layer **612** may affect absorption or attenuation of intensity that is significantly larger increased compared to the absorption or attenuation of intensity of base material **602.** Since blister packages employed for pharmaceutical use may contain a thin layer of optically opaque aluminum, the same may be employed as contrast-enhancing layer **612,** if, for example, X-ray radiation is used for the irradiation of the packaging.

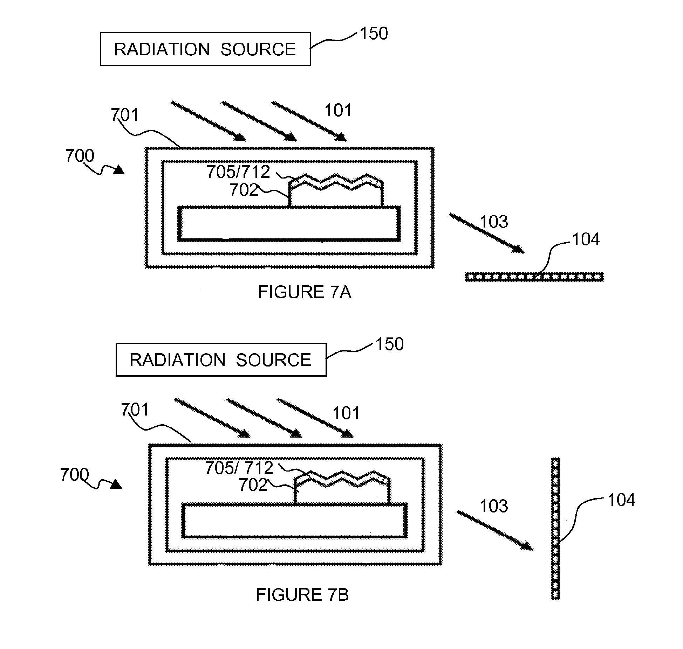

Referring to **FIGURE 7A** and **FIGURE 7B**, further embodiments of the present system and method are schematically illustrated with respect to product units **700,** comprising a packaging **701** for an article **702** wherein a contrast-enhancing layer **712** is provided on article **702** having an intensity-modulating surface **705.** Different positions for radiation detector **104** relative to product units **700** and incident electromagnetic radiation **101** are schematically illustrated in **FIGURE 7A** and **FIGURE 7B**, respectively, to adjust for higher contrast of transmitted electromagnetic radiation **103** detected by radiation detector **104.**

Depending on the reproducibility with which the packaging process is executed, it may not be possible to determine the exact orientation of intensity-modulating surface **705** with respect to packaging **701** of product units **700.** It may be necessary, therefore, to vary the orientation of product units **700** with respect to the propagation direction of incident electromagnetic radiation **101** to find the angular orientation resulting in maximum contrast of the transmitted intensity profile for the transmitted electromagnetic radiation **103.** Authentication systems according to embodiments of the invention that enable varying the orientation of product units **700** with respect to the propagation direction of incident electromagnetic radiation **101** are outlined herein below.

Although some of the embodiments outlined hereinbelow are exemplified with respect to product unit **700.** This should however by no means to be construed as limiting. The embodiments outlined hereinafter can thus additionally or alternatively be implemented with product unit **600.**

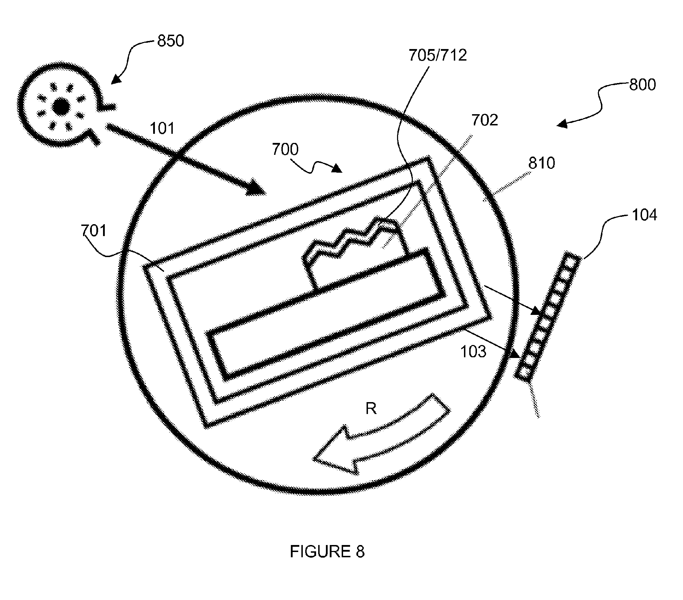

Referring now to **FIGURE 8**, according to an embodiment of the invention, an authentication system **800** comprises a inspection platform **810** embodied, for example by a rotatable turntable operative to be rotated, e.g., as schematically indicated with arrow R, and operative to receive product units **700** comprising an intensity-modulating surface **705.** A radiation source **850** irradiates electromagnetic radiation on product units **700,** and the resulting transmitted electromagnetic radiation **103** is detected with radiation detector **104,** which may be operative to detect one- or two-dimensional radiation. The geometric arrangement of radiation source **850** and radiation detector **104** defines the position between rotary table **810** and radiation source **850.** Rotary table **810** is adjusted until maximum contrast in the detected transmitted electromagnetic radiation **103** is achieved.

An authentication system according to an embodiment of the invention is operative to determine according to at least one method the relative position of product units with respect to a radiation source and a detector achieving maximal contrast respective of intensity-modulating surface **705.** Authentication system **800** for example is operative to determine for a plurality of predetermined positions of rotary table **810** with respect to radiation source **850** the achieved contrast for intensity-modulating surface **705** in the detected transmitted electromagnetic radiation **103.** The contrasts that are determined respective of the plurality of positions may then be compared against each other to determine a maximal contrast respective of intensity-modulating surface **705.** Via an output device (not shown), a perceivable output representative of the determined maximal contrast and optionally of the corresponding position of rotary table **810** is provided. The determined maximal contrast may then be compared against a predetermined minimal and maximal reference contrast value, by a user of authentication system **800** and/or automatically by authentication system **800.** In the event that the determined maximal contrast is lower than the minimal reference contrast value for a predetermined period of time (e.g., 10 ms), a suitable output is provided via an output unit (not shown) indicating to a user (not shown) of authentication system **800** that product units **700** are either not genuine or not correctly positioned on rotary table **800.** Conversely, based on the analysis of intensity-modulating surface **705** by irradiation, in the event that the determined maximal contrast value is higher than the predetermined maximal reference contrast value during a predetermined time period, the product units **700** is determined to be authentic and a suitable acknowledging output may be provided to the user.

According to an alternative embodiment of the invention, each one of the contrast values respective of the plurality of positions is compared against the minimal and maximal reference contrast value. In the event that at least one of the comparisons yields a result indicating that a contrast value is higher than the maximal reference contrast value, authentication system **800** provides based on the performed analysis of surface **705** a suitable output indicating that product unit **700** is authentic. Conversely, if none of the comparisons respective of the plurality of positions yields a result indicating that a determined contrast value is higher than the maximal reference contrast value, but at least one of the comparisons yields a result indicating that a determined contrast value is lower than the minimal reference contrast value, a suitable output is provided by authentication system **800** indicating that product units **700** are not correctly positioned on rotary table **810** and/or that product units **700** are not genuine.

In an embodiment wherein the maximal reference contrast value is not equal the minimal reference contrast value and none of the comparisons outlined hereinabove yield a result indicating that the determined contrast value is higher than the maximal reference contrast value or lower than the minimal reference contrast value, authentication system **800** may provide an output indicating that authentication of product units **700** cannot be determined.

It should be noted that in respective embodiments of the invention the predetermined maximal contrast value is either equal or higher than the predetermined minimal contrast value.

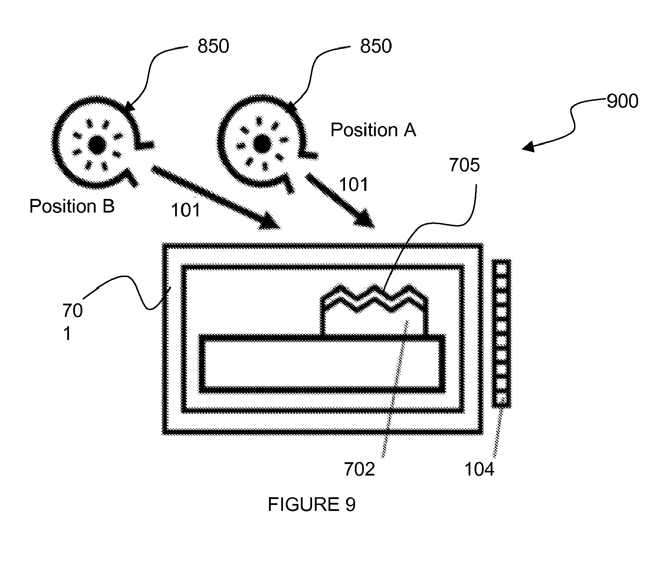

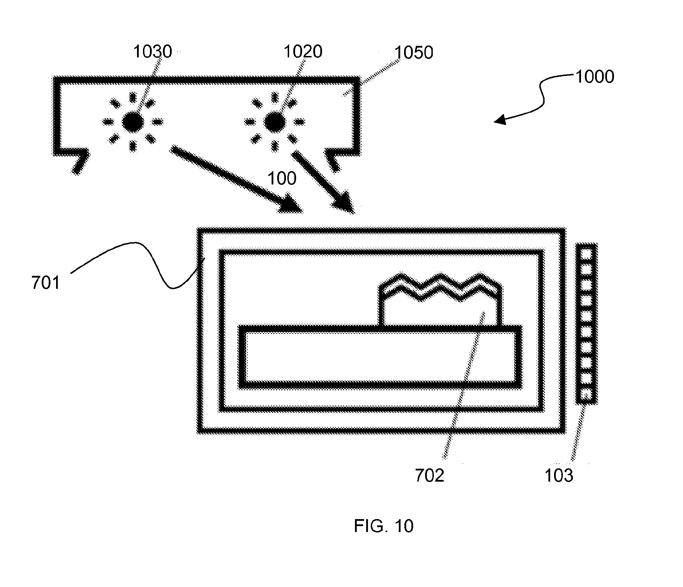

Additional reference is now made to **FIGURE 9.** According to an embodiment of the invention, in an authentication system **900,** inspection platform **810** holding product units **700** may remain stationary with respect to world coordinates whereas the position of radiation source **850** may instead be changeable with respect to inspection platform **810** and thus with respect to product units **700,** as is schematically indicated with position **A** and position **B.** More specifically, radiation source **850** may be displaceable, for example, automatically, to different positions, e.g., laterally, which may result in different orientations between the propagation direction of incident electromagnetic radiation **101** and intensity-modulating surface **705.** For at least some of the plurality of positions of radiation source **850** a transmission image is detected with radiation detector **104,** until an intensity profile enabling the detection thereof for transmitted electromagnetic radiation **103** is found. Depending on the geometric extent of radiation detector **104,** it may possible to leave its position fixed with respect to the position of product units **700.** Alternatively, it may be necessary to move radiation detector **104** as well in accordance with the displacement of radiation source **850,** in order to ensure that the same location of product units **700** is observed. Clearly, the method outlined hereinabove with respect to authentication system **800** for adjusting the position of product units **700** relative to a radiation source and a detector such as for example radiation source **850** and detector **104** until maximal contrast respective of the intensity-modulating surface **705** is achieved, can be implemented analogously by authentication system **900.** Based on the determined maximal contrast, authentication system **900** is operative to determine whether product units **700** are authenticable or not and provide a corresponding output. Additionally or alternatively, authentication system **900** is according to an embodiment of the invention operative to determine whether product units **700** is authentic or not, based on the analysis of intensity-modulating surface **705.** Reference is now made to **FIGURE 10.** According to an embodiment of the invention, an authentication system **1000** comprises an extended radiation source **1050** enabling to produce spots of emitted radiation at different locations like, for example, location **1020** and **1030,** by electronic scanning. It may thus be concluded that radiation source **1050** is displaceable. In the case of infrared radiation, this can be achieved, for example, by providing a one- or two dimensional arrangement of individual infrared light-emitting diodes (IR-LEDs), and each IR-LED can be switched on or off independently of the others. In the case of X-ray radiation this can be achieved, for example, by providing a vacuum enclosure containing a source of free electrons and electromagnetic means to direct the beam of electrons to different locations on a radiation target, where X-ray radiation is being produced on impact. By employing such an extended, electronically switchable radiation source **1050,** it is possible to change the effective location of the spot of incident electromagnetic radiation **101** and its associated direction of propagation. For each of the displaced locations of radiation emission a transmission image and thus the contrast respective of the intensity-modulating surface **705** are detectable with the radiation detector **104.** By identifying intensity-modulating surface **705** at the maximal contrast, or by comparing the maximal contrast against maximal and minimal reference value as outlined hereinabove with respect to authentication system **800** and **900,** authentication system **1000** is operative to provide an output indicative of whether product unit **700** can be authenticated or not and/or whether product unit **700** is authentic or not.

It should be noted that in some embodiments of the invention, a portable authentication system may only optionally comprise an inspection platform. The inspection platform may for example be embodied by any platform operative to receive product units, such as, for example, a regular table.

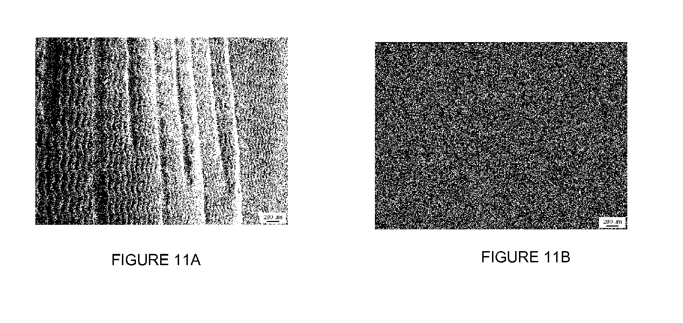

Referring now to **FIGURE 11A,** an image representation of a desired intensity profile generated by an intensity-modulating surface implemented by periodical pyramids. The height-structured surface is embossed in paper with an enhancement layer of aluminum with a thickness of about 5 $\mu$m. In this example, the paper is 15° out of axis of the X-ray radiation, representing an intensity-modulating orientation enabling the detection of the intensity profile. In **Figure 11B,** the intensity profile of the same height-structured surface is shown with the paper perpendicular to the radiation direction, wherein no contrast may be detectable.

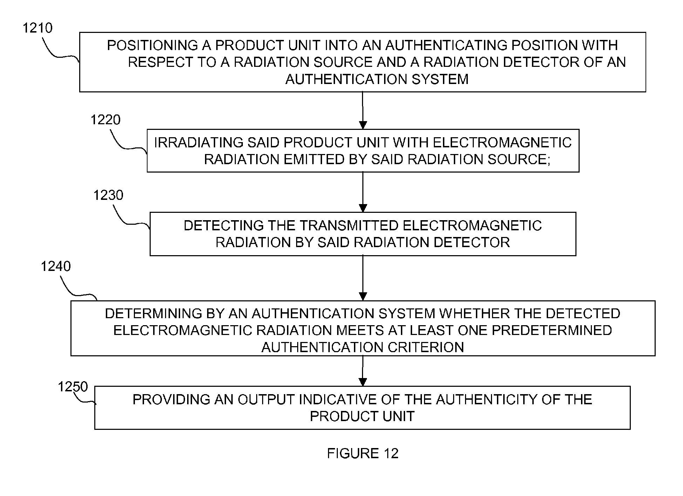

Further reference is now made to **Figure 12**, which illustrates a flow chart of a method for authenticating a product unit, according to an embodiment of the invention. Authenticating a product unit is executed according to at least one predetermined authentication criterion with an authentication system such as, for example, authentication system **800, 900** or **1000.** According to an embodiment of the invention, the method includes, as indicated by box **1210,** the procedure of positioning a product unit like, e.g., product unit **600** and/or **700,** into an authenticating position with respect to radiation source **150** and radiation detector **104.**

As indicated by box **1220,** the method subsequently includes according to an embodiment of the invention the procedure of irradiating product unit **600** and/or **700** with electromagnetic radiation emitted by radiation source **150.**

As indicated by box **1230,** the method then includes according to an embodiment of the invention the procedure of detecting the transmitted electromagnetic radiation by radiation detector **104;** and, as indicated by box **1240,** determining by any of authentication systems **800, 900** or **1000** whether the detected electromagnetic radiation meets the at least one predetermined authentication criterion.

As indicated by box **1240,** the method then includes the procedure of providing an output indicative of the authenticity of product unit **600** and/or **700.**

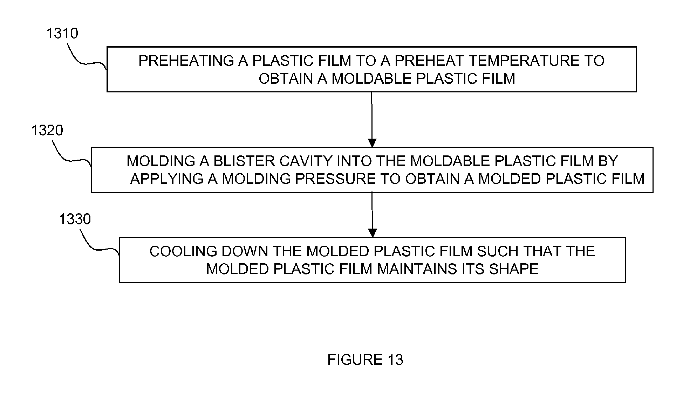

Reference is now made to **Figure 13.** A method for manufacturing an authentication item according to embodiments of the invention is outlined hereinafter with reference to thermoforming. According to embodiments of the disclosed technique, thermoforming may comprise the following procedures: obtaining a plastic film or sheet, e.g., by unwinding the plastic film or sheet from a reel; preheating the plastic sheet to a preheat temperature, e.g., by guiding the same through a preheating station on a blister line, wherein the preheat temperature is such that the plastic film will soften and become moldable, e.g., by maintaining upper and/or lower preheating plates of the preheating station at the preheat temperature. The procedure may then include molding a blister cavity into a negative mold, by subjecting the moldable plastic film to a molding pressure, of, e.g., 4 to 8 bar, generated in a forming station. The molded plastic sheet is then cooled such that it becomes rigid again and maintains its shape when removed from the forming station. In case of difficult moldable shapes, the warm film will be physically pushed down partially into the cavity by a "plug-assist" feature. Prior to the thermoforming, one- or two-dimensional patterns for generating the blister cavities are manufactured in the surface of the thermoforming tools. As the pattern is between the cavities of the blister, a backside aluminum foil may act as an enhancing layer of the molded plastic film.

## Claims

1. An authentication item providable on at least one product unit (600, 700) for encoding said at least one product unit (600, 700) as being authentic,
   **characterized in that**
   said authentication item comprises an intensity-modulating surface (105, 106, 505, 605, 705) having a sawtooth-like profile; and
   wherein said authentication item modulates the intensity of incident electromagnetic radiation (101) in a manner that generates an intensity profile which is characteristic of said authentication item.

2. The authentication item of claim 1,
   **characterized in that**
   said intensity-modulating surface (105, 106, 505, 605, 705) respective of said authentication item forms at least parts of the surface of said at least one product unit (600, 700).

3. The authentication item of claims 1 or 2,
   **characterized in that**
   said intensity-modulating surface (105, 106, 505, 605, 705) comprises a contrast-enhancing layer (512, 612, 712) provided on at least a part of the surface of said at least one product unit (600, 700); and
   wherein said contrast-enhancing layer (512, 612, 712) effects an increased intensity modulation of said incident electromagnetic radiation (101), compared to the attenuation effected by said at least one product unit (600, 700) free of said contrast-enhancing layer.

4. The authentication item of claim 3,
   **characterized in that**
   said contrast-enhancing layer (512, 612, 712) has a thickness d ranging between 5 nm to 1 mm.

**5.** A method of manufacturing the authentication item according to any of the preceding claims, **characterized by** manufacturing the intensity-modulating surface (105, 106, 505, 605, 705) by employing at least one of the following procedures:

  printing, embossing, molding, injection-molding and thermoforming.

**6.** The method of manufacturing the authentication item of claim 5, **characterized in that** said thermoforming comprises the following procedures:

  preheating a plastic film to a preheat temperature to obtain a moldable plastic film;
  molding a blister cavity into said moldable plastic film by applying a molding pressure to obtain a molded plastic film; and
  cooling down said molded plastic film such that said molded plastic film maintains its shape.

**7.** The method for manufacturing of claim 6, **characterized in that** the pressure for molding ranges from 4 to 8 bars.

**8.** An authentication system (800, 900, 1000) for the authentication of at least one product unit (600, 700), **characterized in that** said authentication system comprises:

  a radiation source (150, 850, 1050) operative to emit electromagnetic radiation (101) incident on said at least one product unit (600, 700); and
  a radiation detector (104) operative to detect electromagnetic radiation transmitted through said at least one product unit (600, 700);

  wherein said authentication system (800, 900, 1000) is operative such that the propagation direction of said electromagnetic radiation incident (101) on said at least one product unit (600, 700) is adjustable to different orientations for the detection of intensity profiles of said transmitted electromagnetic radiation for said different orientations to search for an intensity profile that is characteristic of an authentication item comprising an intensity-modulating surface manufacturable on at least one product unit (600, 700).

**9.** The authentication system of claim 8, wherein said radiation source (150, 850, 1050) and said radiation detector (104) are encased in a portable housing.

**10.** The authentication system of claim 9 comprising an inspection platform (810) onto which said at least one product unit (600,700) is positionable for authentication.

**11.** The authentication system of any of the claims 8 to 10, wherein said electromagnetic radiation is in the X-ray or infrared range.

**12.** The authentication system of any of the claims 10 to 11, wherein said inspection platform (810) is a rotatable turntable that enables obtaining said different orientations between said propagation direction and said at least one product unit (600, 700).

**13.** The authentication system of any of the claims 8 to 12, wherein said radiation source (150, 850, 1050) enables generating different orientations between said incident electromagnetic radiation (101) and said at least one product unit (600, 700) by displacement of said radiation source (850) or by scanning with said radiation source (1050).

**14.** A method for authenticating product units according to at least one predetermined authentication criterion with an authentication system (800, 900, 1000) **characterized by** comprising the following procedures:

  a) positioning at least one product unit (600, 700) into an authenticating position with respect to a radiation source (150, 850, 1050) and a radiation detector (104);
  b) irradiating said at least one product unit (600, 700) with electromagnetic radiation emitted by said radiation source (150, 850, 1050);
  c) detecting the transmitted electromagnetic radiation by said radiation detector (104);

d) determining by said authentication system (800, 900, 1000) whether the detected electromagnetic radiation meets said at least one predetermined authentication criterion to yield an authentication result; and
e) providing an output indicative of the authenticity of said at least one product unit (600, 700) according to said authentication result.

15. The method for authenticating product units (600, 700) according to claim 14,
wherein positioning said at least one product unit (600, 700) into an authenticating position with respect to said radiation source (150, 850, 1050) and said radiation detector (104) is performed by at least one of the following procedures: positioning said at least one product unit (600, 700) on a rotatable turntable (810) and rotating said rotatable turntable (810) with respect to said radiation source (150, 850, 1050); scanning said at least one product unit (600, 700) by said radiation source (150, 850, 1050); and changing the position of said radiation source (150, 850, 1050) with respect to said at least one product unit (600, 700).

RADIATION SOURCE

150

100

101

d

115

h

103

104

$I_T(X)$

X

FIGURE 1

FIGURE 2

125   101A   101B   105   106
                              107   109
                              108   110   φ
hs

d

FIGURE 3A

125   101A   101B   105
            121   121   121   121   110
hs
            d
d

FIGURE 3B

125   122   122   122  105  122
      101B  101A
hs              d
                              110
d

FIGURE 3C

FIGURE 4A

FIGURE 4B

FIG. 5A

FIG. 5B

600

RADIATION SOURCE

150

101

605

602

610

612

630

601

620

FIG. 6

RADIATION SOURCE — 150

701

700

101

705/712
702

103

104

FIGURE 7A

RADIATION SOURCE — 150

701

700

101

705/ 712
702

103

104

FIGURE 7B

FIGURE 8

FIGURE 9

FIG. 10

FIGURE 11A

FIGURE 11B

1210

POSITIONING A PRODUCT UNIT INTO AN AUTHENTICATING POSITION WITH RESPECT TO A RADIATION SOURCE AND A RADIATION DETECTOR OF AN AUTHENTICATION SYSTEM

1220

IRRADIATING SAID PRODUCT UNIT WITH ELECTROMAGNETIC RADIATION EMITTED BY SAID RADIATION SOURCE;

1230

DETECTING THE TRANSMITTED ELECTROMAGNETIC RADIATION BY SAID RADIATION DETECTOR

1240

DETERMINING BY AN AUTHENTICATION SYSTEM WHETHER THE DETECTED ELECTROMAGNETIC RADIATION MEETS AT LEAST ONE PREDETERMINED AUTHENTICATION CRITERION

1250

PROVIDING AN OUTPUT INDICATIVE OF THE AUTHENTICITY OF THE PRODUCT UNIT

FIGURE 12

1310

PREHEATING A PLASTIC FILM TO A PREHEAT TEMPERATURE TO
OBTAIN A MOLDABLE PLASTIC FILM

1320

MOLDING A BLISTER CAVITY INTO THE MOLDABLE PLASTIC FILM BY
APPLYING A MOLDING PRESSURE TO OBTAIN A MOLDED PLASTIC FILM

1330

COOLING DOWN THE MOLDED PLASTIC FILM SUCH THAT THE
MOLDED PLASTIC FILM MAINTAINS ITS SHAPE

FIGURE 13

Europäisches
Patentamt

European
Patent Office

Office européen
des brevets

# EUROPEAN SEARCH REPORT

Application Number

EP 10 15 7911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/013000 A2 (GIESECKE & DEVRIENT GMBH [DE]; ADAMCZYK ROGER [DE]; BALDUS CHRISTOPH []) 29 January 2009 (2009-01-29) * page 10, line 22 - page 11, line 4 * * page 16, lines 4-22 * * page 21, line 24 - page 22, line 12; claims 33-37; figures 2a,2b * | 1-7 | INV. B42D15/00 B42D15/10 G07D7/06 |
| X | US 6 036 233 A (BRAUN ECKHARD [DE] ET AL) 14 March 2000 (2000-03-14) * column 1, lines 19-23 * * column 3, lines 18-29 * * column 3, lines 51-64; figures 1,3,22 * | 1-7 | |
| X | WO 2007/115656 A2 (GIESECKE & DEVRIENT GMBH [DE]; BALDUS CHRISTOF [DE]; VOIT MAX [DE]; ZE) 18 October 2007 (2007-10-18) * page 15, lines 17-28 * * page 17, line 26 - page 18, line 12 * * page 22, line 28 - page 26, line 13; figures 1,5 * | 1,2,5-7 | |
| X | US 2006/262894 A1 (BERNHARDT PHILIPP [DE] ET AL) 23 November 2006 (2006-11-23) * paragraph [0024]; figure 1 * | 8,11,13 | TECHNICAL FIELDS SEARCHED (IPC) B42D G07D |
| X | US 4 660 859 A (NATESH RAM [US]) 28 April 1987 (1987-04-28) * column 4, line 13 - column 5, line 8; claims 10,11; figure 1 * | 14 | |
| Y | WO 2008/134910 A1 (BOEGLI GRAVURES SA [CH]; BOEGLI CHARLES [CH]) 13 November 2008 (2008-11-13) | 1-7 | |
| A | * page 5, line 34 - page 6, line 6 * * page 7, line 23 - page 8, line 10 * * page 8, line 25 - page 9, line 17; claims 1,2 * | 8-15 | |

-/--

The present search report has been drawn up for all claims

| Place of search | Date of completion of the search | Examiner |
|---|---|---|
| Munich | 12 May 2010 | D'Incecco, Raimondo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 437 213 A1 (BOEGLI GRAVURES SA [CH]) 14 July 2004 (2004-07-14) * paragraphs [0038], [0039]; figures 9-10 * | 1-7 | |

-----

TECHNICAL FIELDS
SEARCHED      (IPC)

The present search report has been drawn up for all claims

| Place of search | Date of completion of the search | Examiner |
|---|---|---|
| Munich | 12 May 2010 | D'Incecco, Raimondo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 15 7911

The Search Division considers that the present European patent application does not comply with the
requirements of unity of invention and relates to several inventions or groups of inventions, namely:

```
1. claims: 1-7

        autehentication item with an intensity-modulating surface
        having a sawtooth-like profile
                                        ---

2. claims: 8-13

        autentication by detecting orientable radiation transmitted
        through the product
                                        ---

3. claims: 14, 15

        verifying the authenticity ctriterion of the detected
        transmitted radiation and by indicating the result
                                        ---
```

**ANNEX TO THE EUROPEAN SEARCH REPORT
ON EUROPEAN PATENT APPLICATION NO.**

EP 10 15 7911

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2010

| Patent document cited in search report | | | Publication date | Patent family member(s) | | | Publication date |
|---|---|---|---|---|---|---|---|
| WO 2009013000 | A2 | | 29-01-2009 | CA | 2694383 | A1 | 29-01-2009 |
| | | | | DE | 102007035161 | A1 | 29-01-2009 |
| | | | | EP | 2173567 | A2 | 14-04-2010 |
| US 6036233 | A | | 14-03-2000 | AT | 250508 | T | 15-10-2003 |
| | | | | AU | 7562096 | A | 29-05-1997 |
| | | | | BG | 64379 | B1 | 30-12-2004 |
| | | | | BG | 101719 | A | 31-03-1998 |
| | | | | BG | 108790 | A | 31-01-2005 |
| | | | | BG | 65294 | B1 | 28-12-2007 |
| | | | | CA | 2209285 | A1 | 15-05-1997 |
| | | | | DE | 19541064 | A1 | 07-05-1997 |
| | | | | DE | 19680958 | D2 | 02-12-1999 |
| | | | | DK | 801604 | T3 | 02-02-2004 |
| | | | | WO | 9717211 | A1 | 15-05-1997 |
| | | | | EP | 0801604 | A1 | 22-10-1997 |
| | | | | ES | 2205064 | T3 | 01-05-2004 |
| | | | | JP | 11501590 | T | 09-02-1999 |
| | | | | PL | 321140 | A1 | 24-11-1997 |
| | | | | PT | 801604 | E | 27-02-2004 |
| | | | | RU | 2161092 | C2 | 27-12-2000 |
| | | | | US | 6283509 | B1 | 04-09-2001 |
| WO 2007115656 | A2 | | 18-10-2007 | DE | 102006016342 | A1 | 11-10-2007 |
| | | | | EP | 2007586 | A2 | 31-12-2008 |
| US 2006262894 | A1 | | 23-11-2006 | CN | 1864632 | A | 22-11-2006 |
| | | | | DE | 102005022540 | A1 | 23-11-2006 |
| US 4660859 | A | | 28-04-1987 | NONE | | | |
| WO 2008134910 | A1 | | 13-11-2008 | CA | 2684499 | A1 | 13-11-2008 |
| | | | | CN | 101689317 | A | 31-03-2010 |
| | | | | EP | 2153421 | A1 | 17-02-2010 |
| | | | | US | 2010061619 | A1 | 11-03-2010 |
| EP 1437213 | A1 | | 14-07-2004 | CA | 2453827 | A1 | 23-06-2004 |
| | | | | JP | 4426836 | B2 | 03-03-2010 |
| | | | | JP | 2004203046 | A | 22-07-2004 |
| | | | | US | 2004151796 | A1 | 05-08-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006027688 A, Walter
- US 20080199406 A, Walter
- US 20030194053 A, Schramm
- EP 1348575 A, Landqart